# EUROPÄISCHE PATENTSCHRIFT

(11) **EP 1 100 634 B1**
(45) Veröffentlichungstag und Bekanntmachung des Hinweises auf die Patenterteilung: **05.03.2003**
(21) Anmeldenummer: 99938283.1
(22) Anmeldetag: 17.07.1999
(51) Int. Cl.: B21B 31/02, B23Q 1/00

(54) **ANORDNUNG VON ZUFUHR-, ABFUHR- UND VERTEILERLEITUNGEN FÜR INSBESONDERE FLÜSSIGE BETRIEBSMEDIEN AN WALZGERÜSTEN**
SYSTEM OF SUPPLY, DISCHARGE AND DISTRIBUTION LINES FOR NOTABLY LIQUID OPERATING MEDIA IN ROLLING STANDS
SYSTEME DE CONDUITES D'ALIMENTATION, D'EVACUATION ET DE DISTRIBUTION, POUR SUBSTANCES D'EXPLOITATION NOTAMMENT LIQUIDES, AU NIVEAU DE CAGES DE LAMINOIR

(30) Priorität: 24.07.1998 DE 19833323
(43) Veröffentlichungstag der Anmeldung: 23.05.2001
(73) Patentinhaber: SMS SCHLOEMANN-SIEMAG AKTIENGESELLSCHAFT, 40237 Düsseldorf (DE)
(72) Erfinder: BENNER, Frank, D-57271 Hilchenbach (DE); RACKEL, Harald, D-57271 Hilchenbach (DE); REIMANN, Friedhelm, D-57339 Erndtebrück (DE); HOPFENZIZ, Heinz, D-57258 Freudenberg (DE); STÖTZEL, Helmut, D-57271 Hilchenbach (DE); TRUDEWIND, Heinz, D-57368 Lennestadt (DE); NIETSCH, Walter, D-57271 Hilchenbach (DE)
(74) Vertreter: Valentin, Ekkehard, Dipl.-Ing.
(86) Internationale Anmeldenummer: EP9905114
(87) Internationale Veröffentlichungsnummer: WO00005005

(56) Entgegenhaltungen:
- DE-U- 9 408 440
- PATENT ABSTRACTS OF JAPAN vol. 004, no. 002 (C-069), 9. Januar 1980 (1980-01-09) -& JP 54 137464 A (HITACHI LTD), 25. Oktober 1979 (1979-10-25)

## Beschreibung

Die Erfindung betrifft eine Anordnung von Zufuhr-, Abfuhr- und Verteilerleitungnen eines Verteilernetzes für insbesondere flüssige Betriebsmedien, wie Schmier- und Kühlmittel sowie hydraulische Druckmedien für Stellorgane oder Antriebe an mit Ständern ausgebildeten Walzgerüsten.

Beim bisherigen Stand der Gerüstverrohrung wurde die Versorgung der Hydraulikverbraucher üblicherweise über zwei Medienstationen durchgeführt. Hierfür wurden Ventilstände
- auf dem Fundament (Looper),
- auf der Bühne, insbesondere für Servohydraulik,
- im Keller, insbesondere für Hilfshydraulik,
- an den Gerüsten bevorzugt an mehreren Stellen dezentral angeordnet.

Dadurch bedingt ergab sich eine große Anzahl von Rohrleitungen aus dem Keller zur Maschine, wofür etwa 250 Schnittstellen Fundament/Maschine erforderlich waren;
darüber hinaus waren starre Verrohrungen zum Teil auf dem Ständer, zum Teil an Rohrstücken erforderlich, was infolge Erschütterungen beim Betrieb sowie unter sonstigen erschwerten Bedingungen gelegentlich zu Leckagen der Rohrstücke bzw. ihrer Verbindungselemente führte;
eine immer neue Anordnung der Rohrleitung ergab sich durch anlagenspezifische Leitungsführung zu einzelnen Betriebsorten.

Die DE U 94 08 440.8 offenbart eine Ausbildung der Zu-, Abfuhr- und Verteilleitungen für insbesondere flüssige Betriebsmedien in, aus geschlossenen oder offenen Tragrahmen gebildeten Maschinengehäusen. Die Leitungen bestehen aus in die Tragrahmen des Maschinengehäuses eingebrachten Längsbohrungen.

Das Dokument JP-A-54 137 464 offenbart einen Versorgungsblock für die Zuführung bzw. Abführung von hydraulischen Medien zu einem separat stehenden Walzgerüst. Der Versorgungsblock kann aus mehreren Modulen gebildet werden.

Hydraulische Druckleitungen verbinden den Versorgungsblock mit dem Walzgerüst. Die Druckleitungen müssen flexibel sein, was bei den sehr hohen Betriebsdrücken hohe Installationskosten verursacht.

Ausgehend vom vorgenannten Stand der Technik liegt der Erfindung die Aufgabe zugrunde, eine Anordnung von Zufuhr-, Abfuhr- und Verteilerleitungen eines Verteilernetzes für flüssige Betriebsmedien der im Oberbegriff von Anspruch genannten Art dahingehend zu verbessern bzw. neu zu ordnen, um dadurch u.a. den Aufwand der Baustellenverrohrung insgesamt signifikant zu reduzieren, die Zugänglichkeit zu den Rohrleitungen zu verbessern, durch Anordnung der Steuerungen an zentraler Steile die Servicefreundlichkeit und Kontrolle beim Betrieb zu erleichtern und u.a. eine Hydraulikverrohrung im Keller zu vermeiden.

Zur Lösung der Aufgabe wird bei einer Anordnung der Rohrleitungen eines Verteilernetzes für insbesondere flüssige Betriebsmedien an Walzgerüsten der im Oberbegriff von Anspruch 1 genannten Art mit der Erfindung vorgeschlagen, daß alle Verbraucher eines Gerüstes an ein Hochdruck-Verteilernetz für die Betriebsmedien angeschlossen sind und daß Zu- und/oder Abfuhrleitungen des Verteilernetzes unter Ausbildung von Rohrleitungsgruppen zu an das Gerüst montierbare Modulen zusammengefaßt sind.

Mit großem Vorteil wird durch die erfindungsgemäße Anordnung des Hydraulik-Versorgungsnetzes eines Walzgerüstes der Aufwand der Baustellenverrohrung insgesamt reduziert, die Zugänglichkeit zu den Rohrleitungen erheblich verbessert und infolge der Anordnung der Steuerungen an zentraler Stelle die Servicefreundlichkeit und Kontrollmöglichkeit beim Betrieb erleichtert sowie die Möglichkeit geschaffen, die Hydraulikverrohrung im Keller völlig zu vermeiden.

Eine Ausgestaltung der Erfindung sieht vor, daß das Verteilernetz Rohrleitungsgruppen der folgenden Modulen aufweist:
- einen mit den Rohrleitungsgruppen in Verbindung stehenden zentralen Leitstand (5) in oder auf der Medienbühne des Gerüstes,
- eine Rohrtrasse auf der Gerüstoberseite,
- Rohrtrassen an Gerüst-Seitenwänden bzw. Gerüstpfosten für Medien-Einlauf an der Bedienungsseite,
- Rohrtrassen an Gerüst-Seitenwänden bzw. Gerüstpfosten, für Medien-Auslauf an der Bedienungsseite
- Leitungen für Medien-Zulauf an der Antriebsseite
- Leitungen für Medien-Auslauf an der Antriebsseite.

Die Auswirkungen auf die Fertigung bzw. Montage des Rohrleitungs-Versorgungsnetzes eines Walzgerüstes sind gravierend, insbesondere ergeben sich folgende Vorteile:
- Reduzierung von Formstücken und Fittings;
- Reduzierung von Bögen in den Isometrien;
- Vermeidung der Herstellung von fertigungsintensiven Rohrstützen;
- Reduzierung aller Schweißarbeiten;
- die Module ergeben eine vorteilhafte Möglichkeit zur Vorfertigung von Rohrleitungsabschnitten unabhängig von den Gerüsten in der Werkstatt;
- eine Standardisierung der Rohrleitungsquerschnitte ist möglich.

Eine vorteilhafte Ausgestaltung der Anordnung ergibt sich aus der Maßnahme, daß Rohrleitungsgruppen bzw. Leitungsabschnitte als werkstattmäßig vorfertigbare Baugruppen einzelner Module ausgebildet sind.

Dadurch entfallen Anpaßarbeiten in diesem Bereich, die Montagestunden reduzieren sich um ein Drittel durch Wegfall von Sortierarbeiten und Lagerung, und ein weiterer positiver Nebeneffekt wird durch das Entfallen der Hydraulikverrohrung im Keller verwirklicht. Insgesamt ergibt sich hieraus ein reduzierter Aufwand der Baustellenverrohrung und eine wesentliche Verbesserung der Wartungs- und Servicefreundlichkeit.

Weitere Vorteile ergeben sich entsprechend den Merkmalen der Unteransprüche.

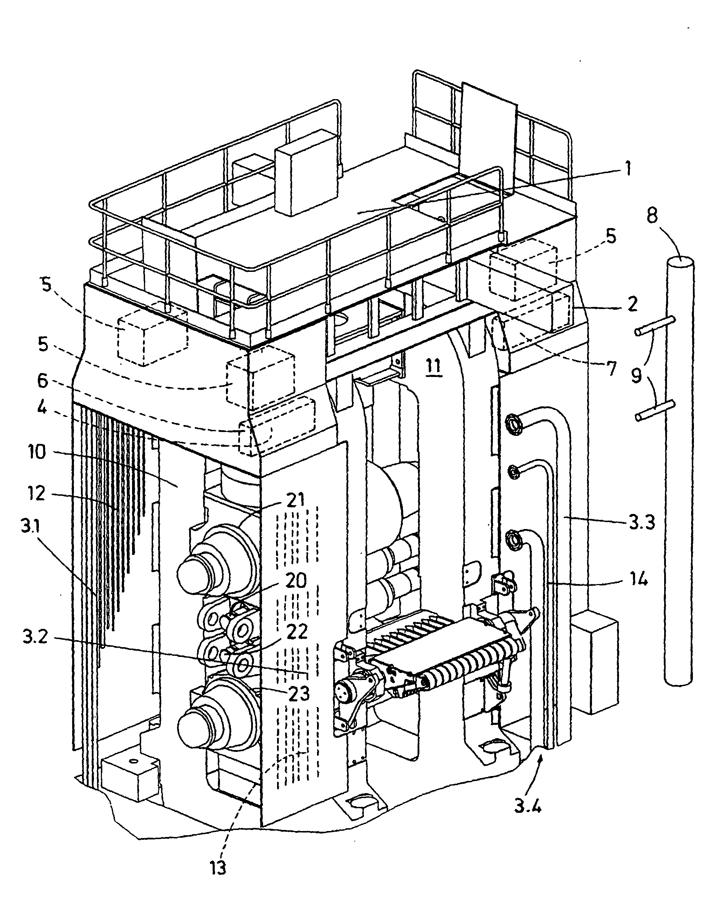

Einzelheiten, Merkmale und Vorteile der Erfindung ergeben sich aus der nachstehenden Erläuterung eines in der Zeichnung schematisch dargestellten Ausführungsbeispieles. Die Zeichnung zeigt
in perspektivischer Ansicht teilweise von vorn, teilweise von der Seite ein Walzgerüst mit einer Verrohrung eines Verteilernetzes für flüssige Betriebsmedien gemäß der Erfindung.

Bei dem in der Figur gezeigten Ausführungsbeispiel wird eine wesentliche Vereinfachung des Rohrleitungs-verteiler- und Versorgungsnetzes für flüssige Betriebsmedien wie Schmier- oder Kühlmittel sowie hydraulische Druckmedien für Stellorgane oder Antriebe an dem mit offenen oder geschlossenen Ständern 10, 11 ausgebildeten Walzgerüst durch eine Vereinheitlichung des Nenndruckes bspw. auf 290 bar für alle Verbraucher des Gerüstes erzielt. Das Walzgerüst ist ein 4-Walzengerüst mit Arbeitswalzen, die in Walzeneinbaustücken 20, 22 gelagert sind und mit Stützwalzen, die in Walzeneinbaustücken 21, 23 gelagert sind.

Die Zu- und/oder Abfuhrleitungen des Verteilernetzes sind unter Ausbildung von Rohrleitungs-Gruppen, bspw. 12, 13, 14 zu Modulen 1 bis 3.4 zusammengefaßt. Mit Vorteil ist zum Zuführen von Betriebsmedium zum Verteilernetz des Gerüstes neben diesem eine medienführende Säule 8 mit Anschlüssen 9 vorgesehen. Der Leitstand 5, zugeordnet dem Modul 1, ist in der kopfseitigen Bühne des Gerüstes vorgesehen.

Das Verteilernetz weist Rohrleitungsgruppen der folgenden Modulen auf:
- Alle Verbraucher eines Gerüstes sind an ein Hochdruck-Vertei- lernetz für die Betriebsmedien, bevorzugt mit einem Nenndruck von 290 bar, angeschlossen;
- Zu- und/oder Abfuhrleitungen des Verteilernetzes sind unter Ausbildung von Rohrleitungs-Gruppen (12, 13, 14) zu Modulen (1 - 3.4) zusammengefaßt;
- zum Zuführen von Betriebsmedium zum Verteilernetz des Gerüstes ist neben diesem eine medienführende Säule (8) mit Anschlüssen (9) vorgesehen, und
- zur Steuerung und Kontrolle der Funktionen des Gerüstes ist ein zentraler Leitstand (5) vorhanden.

Erhebliche Vorteile ergeben sich dadurch, daß Rohrleitungsgruppen bzw. Leitungsabschnitte 12 - 14 als werkstattmäßig vorfertigbare Baugruppen einzelner Module 1 - 3.4 ausgebildet sind.

Hieraus ergeben sich insgesamt signifikante Vorteile für die Fertigung und Montage eines Gerüstes bspw. durch Vermeidung von Anpaßarbeiten zwischen Modulen und Anschlußstellen, bspw. der Montageplatten 6 und 7. Weitere Vorteile wurden in der Beschreibung zuvor genannt.

Wie die Figur weiter zeigt, ergibt die Zusammenfassung von Rohrleitungsbündeln der einzelnen Module Vorteile dadurch, daß das Verteilernetz infolge möglichst weitgehender Verlegung gerader Leitungsabschnitte 12 bis 14 eine vergleichsweise geringe Anzahl von Form- oder Bogenstücken aufweist. Anstelle einer Vielzahl individueller Leitungen zum Zu- und Abführen von Betriebsmedium zu einzelnen Funktionselementen des Gerüstes gehen diese nunmehr von zentralen, am Gerüst angeordneten Verteilungen 6, 7 aus, welche ihrerseits an Sammelleitungen bzw. Module 3.2, 3.3, 3.4 für zu- und abzuführendes Betriebsmedium angeschlossen sind.

Weiterhin zeigt die Figur die vorteilhafte Anordnung der Verteilungen 6, 7 in Form von Montageplatten 4, die bevorzugt zum Anschluß von Rohrgruppen bspw. Leitungsstücke 12, 13 für Module 3.2, 3.3, 3.4 ein- und auslaufseitig in der oberen Einhausung liegen. Die Steuerungen sind in 4 Säulen in der oberen Einhausung untergebracht.

Die Leitungsführung ist unabhängig von mechanischen Komponenten wie Arbeitswalzen-Verriegelung, Stützwalzen-Verriegelung oder Spindelhalterung geführt.

Die Auflagepunkte für das auf den Gerüstständern 10, 11 anzuordnende Modul 1 sind so gestaltet, daß eine Anpassung des Moduls 1 nur zur Straßenbreite erfolgen muß. Infolgedessen können Montage-, Wartungs- oder Revisionsarbeiten bzw. Kontrollen an den Leitständen im Betrieb außerhalb des Straßenbereiches unter erleichterten Arbeitsbedingungen durchgeführt werden

Zur Verbindung von Modulen 1 - 3.4 untereinander werden flexible Schläuche verwendet. Durch die flexible Verbindung zwischen den Modulen ist eine Montage derselben ohne Paßlängen möglich, und darüber hinaus wird eine Übertragung von betriebsbedingten Schwingungen oder Erschütterungen vollständig vermieden und die Anpaßarbeiten in diesem Bereich entfallen.

Insgesamt ergibt die konsequente Durchführung und Anwendung der Erfindung eine signifikante Reduzierung des Aufwandes der Baustellenverrohrung sowie eine Verbesserung der Servicefreundlichkeit und Humanisierung der Arbeitsbedingungen bei der Durchführung von Montage- und Kontrollarbeiten.

Liste der Bezugszeichen
- 1: Modul
- 2: Modul
- 3.1 - 3.4: Modul
- 4: Montageplatte
- 5: zentraler Leitstand
- 6: Verteilung
- 7: Verteilung
- 8: Säule
- 9: Anschlüsse
- 10: Gerüstständer
- 11: Gerüstständer
- 12: Leitungsstück
- 13: Leitungsstück
- 14: Leitungsstück

- 20: Walzeneinbaustück
- 21: Walzeneinbaustück
- 22: Walzeneinbaustück
- 23: Walzeneinbaustück

## Patentansprüche

1. Anordnung von Zufuhr-, Abfuhr und Verteilerleitungen eines Verteilemetzes für insbesondere flüssige Betriebsmedien wie Schmier- oder Kühlmittel sowie hydraulische Druckmedien für Stellorgane oder Antriebe an mit Ständern (19, 11) ausgebildeten Walzgerüsten,
**dadurch gekennzeichnet,**
- **dass** alle Verbraucher eines Gerüstes an ein Hochdruck-Verteilernetz für die Betriebsmedien angeschlossen sind, und
- **dass** Zu- und/oder Abfuhrleitungen des Verteilernetzes unter Ausbildung von Rohrleitungsgruppen (12, 13, 14) zu an das Gerüst montierbare Module (1-3.4) zusammengefaßt sind,
- **dass** zur Steuerung und Kontrolle der Funktionen des Gerüstes ein zentraler Leitstand (5) für die Module vorhanden ist.

2. Anordnung nach Anspruch 1,
**dadurch gekennzeichnet,**
**dass** das Verteilernetz Rohrleitungsgruppen der folgenden Modulen aufweist:
- einen mit den Rohrteitungsgruppen in Verbindung stehenden zentralen Leitstand (5) in oder auf der Medienbühne des Gerüstes, (Modul 1)
- eine Rohrtrasse auf der Gerüstoberseite, (Modul 2)
- Rohrtrassen an Gerüst-Seitenwänden bzw. Gerüstpfosten für Medien-Einlauf an der Bedienungsseite, (Modul 3.1)
- Rohrtrassen an Gerüst-Seitenwänden bzw. Gerüstpfosten für Medien-Auslauf an der Bedienungsseite, (Modul 3.2)
- Leitungen für Medien-Zulauf an der Antriebsseite, (Modul 3.4)
- Leitungen für Medien-Auslauf an der Antriebsseite, (Modul 3.3).

3. Anordnung nach Anspruch 1 oder 2,
**dadurch gekennzeichnet,**
**dass** Rohrieitungsgruppen bzw. Leitungsabschnitte (12-14) als werkstattmäßig vorfertigbare Baugruppen einzelner Module (1- 3.4) ausgebildet sind.

4. Anordnung nach einem der Ansprüche 1 bis 3,
**dadurch gekennzeichnet,**
**dass** das Verteilernetz infolge möglichst weitgehender Verlegung gerader Leitungsabschnitte (12-14) eine vergleichsweise geringe Anzahl von Form- oder Bogenstücken aufweist.

5. Anordnung nach einem oder mehreren der Ansprüche 1 bis 4,
**dadurch gekennzeichnet,**
**dass** anstelle einer Vielzahl individueller Leitungen zum Zu- und Abführen von Betriebsmedium zu einzelnen Funktionselementen des Gerüstes diese von zentralen, am Gerüst angeordneten Verteilungen (6, 7) ausgehen, die an Sammelleitungen bzw. Module (3.2, 3.3, 3.4) für zu- und abzuführendes Betriebsmedium angeschlossen sind.

6. Anordnung nach einem oder mehreren der Ansprüche 1 bis 5,
**dadurch gekennzeichnet,**
**dass** Verteilungen (6, 7) in Form von Montageplatten (4) ausgebildet und bevorzugt zum Anschluß von Rohrgruppen für Module (3.2, 3.3, 3.4) in der oberen Gerüsteinhausung liegen.

7. Anordnung nach einem oder mehreren der Ansprüche 1 bis 6,
**dadurch gekennzeichnet,**
**dass** die Leitungsführung unabhängig von mechanischen Komponenten wie Arbeitswalzen-Verriegelung, Stützwalzen-Verriegelung, Spindelhalterung oder dergleichen geführt ist.

8. Anordnung nach einem oder mehreren der Ansprüche 1 bis 7,
**dadurch gekennzeichnet,**
**dass** die Auflagepunkte für das auf Gerüstständern (10, 11) anzuordnende Modul (1) so gestaltet sind, dass eine Anspassung des Moduls (2) nur zur Straßenbreite erfolgen muß.

9. Anordnung nach einem oder mehreren der Ansprüche 1 bis 8,
**dadurch gekennzeichnet,**
**dass** zur Verbindung von Modulen (1-3.4) untereinander flexible Schläuche verwendet sind.

10. Anordnung nach einem oder mehreren der Ansprüche 1 bis 9,
**dadurch gekennzeichnet,**
**dass** zum Zuführen von Betriebsmedium zum Verteilernetz des Gerüstes neben diesem eine medienführende Säule (8) mit Anschlüssen (9) vorgesehen ist.

## Claims

1. Arrangement of feed ducts, discharge ducts and distributor ducts of a distributor mains for, in particular, liquid operating media such as lubricant or coolant as well as hydraulic pressure media for setting elements or drives at roll stands formed with housings (19, 11), **characterised in that**
- all consumers of a stand are connected with a high-pressure distributor mains for the operating media,
- feed and/or discharge ducts of the distributor mains are combined, with formation of pipe duct groups (12, 13, 14), into modules (1 - 3.4) able to be mounted at the stand and
- a central control station (5) for the modules is present for control and checking of the functions of the stand.

2. Arrangement according to claim 1, **characterised in that** the distributor mains comprises pipe duct groups of the following modules:
- a central control station (5), which is disposed in connection with the pipe duct groups, in or on the media stage of the stand (module 1),
- a pipe line on the stand upper side (module 2),
- pipe lines at stand side walls or stand uprights for media inflow at the operating side (module 3.1),
- pipe lines at stand side walls or stand uprights for media inflow at the operating side (module 3.2),
- ducts for media feed to the drive side (module 3.4) and
- ducts for media outlet at the drive side (module 3.3).

3. Arrangement according to claim 1 or 2, **characterised in that** pipe duct groups or duct sections (12 - 14) are constructed as subassemblies, which can be workshop-prefabricated, of individual modules (1 - 3.4).

4. Arrangement according to one of claims 1 to 3, **characterised in that** the distributor mains has, as a consequence of the widest possible laying of straight duct sections (12 - 14), a comparatively small number of shaped or curved pieces.

5. Arrangement according to one or more of claims 1 to 4, **characterised in that** instead of a plurality of individual ducts for the feeding and discharging of operating medium to and from individual functional elements of the stand these go out from central distribution points (6, 7) which are arranged at the stand and which are connected with collecting ducts or modules (3.2, 3.3, 3.4) for operating medium to be fed and to be discharged.

6. Arrangement according to one or more of claims 1 to 5, **characterised in that** distribution points (6, 7) are constructed in the form of mounting plates (4) and are disposed, preferably for connection of pipe groups for modules (3.2, 3.3, 3.4), in the upper stand enclosure.

7. Arrangement according to one or more of claims 1 to 6, **characterised in that** the duct guidance is led independently of mechanical components such as working roll locking means, backing roll locking means, spindle mount or the like.

8. Arrangement according to one or more of claims 1 to 7, **characterised in that** the support points for the module (1) to be arranged on stand housings (10, 11) are so formed that an adaptation of the module (2) has to be carried out only to the rolling train width.

9. Arrangement according to one or more of claims 1 to 8, **characterised in that** flexible hoses are used for the interconnection of modules (1 - 3.4).

10. Arrangement according to one or more of claims 1 to 9, **characterised in that** for the feed of operating medium to the distributor mains of the stand there is provided adjacent thereto a media-conducting column (8) with connections (9).

## Revendications

1. Système de conduites d'alimentation, d'évacuation et de distribution d'un réseau distributeur pour substances de service en particulier liquides, comme des agents lubrifiants ou réfrigérants, ainsi que de fluides hydrauliques sous pression pour des servomoteurs ou des entraînements au niveau de cages de laminoir réalisées avec des montants (19, 11),
**caractérisé en ce que**
- tous les dispositifs consommateurs d'une cage sont branchés à un réseau distributeur sous haute pression pour les substances de service, et
- les conduites d'alimentation et/ou d'évacuation du réseau distributeur sont réunies en modules (1-3.4) susceptibles d'être montés sur la cage, en formant des groupes de conduites tubulaires (12, 13, 14),
- pour commander et contrôler les fonctions de la cage, il est prévu un poste de contrôle central (5) pour les modules.

2. Système selon la revendication 1, **caractérisé en ce que** le réseau distributeur comprend des groupes de conduites tubulaires des modules suivants :
- un poste de contrôle central (5) en liaison avec les groupes de conduites tubulaires dans ou sur la plate-forme de la cage (module 1),
- un tracé de tubes sur la face supérieure de la cage (module 2),
- des tracés de tubes sur les parois latérales de la cage ou sur les montants de cage pour l'entrée de substances sur le côté manipulation (module 3.1),
- des tracés de tubes sur les parois latérales de la cage ou sur les montants de cage pour la sortie de substances sur le côté manipulation (module 3.2),
- des conduites pour l'admission de substances sur le côté entraînement (module 3.4),
- des conduites pour la sortie de substances sur le côté entraînement (module 3.3).

3. Système selon l'une ou l'autre des revendications 1 et 2, **caractérisé en ce que** des groupes de conduites tubulaires ou des tronçons de conduite (12-14) sont réalisés sous forme de groupes structurels, susceptibles d'être préfabriqués en usine, de modules individuels (1-3.4).

4. Système selon l'une des revendications 1 à 3, **caractérisé en ce que** le réseau distributeur présente un nombre comparativement faible d'éléments conformés ou de coudes en raison d'une pose aussi étendue que possible de tronçons de conduite rectilignes (12-14).

5. Système selon l'une ou plusieurs des revendications 1 à 4, **caractérisé en ce qu'**à la place d'une multitude de conduites individuelles pour alimenter et évacuer des substances de service aux éléments fonctionnels individuels de la cage, celles-ci partent de distributeurs centraux (6, 7) agencés sur la cage, qui sont raccordés à des conduites de collecte ou à des modules (3.2, 3.3, 3.4) pour les substances de service à alimenter et à évacuer.

6. Système selon l'une ou plusieurs des revendications 1 à 5, **caractérisé en ce que** des distributeurs (6, 7) sous réalisés forme de plateaux de montage (4) et se trouvent de préférence dans l'enceinte de cage supérieure pour le raccordement de groupes de tubes pour des modules (3.2, 3.3, 3.4).

7. Système selon l'une ou plusieurs des revendications 1 à 6, **caractérisé en ce que** le tracé de conduites est guidé indépendamment des composants mécaniques, tels que le verrouillage des cylindres de travail, le verrouillage des cylindres d'appui, la monture de broche et similaires.

8. Système selon l'une ou plusieurs des revendications 1 à 7, **caractérisé en ce que** les points d'appui pour le module (1) à agencer sur les montants de cage (10, 11) sont réalisés de telle sorte qu'une adaptation du module (2) est nécessaire uniquement par rapport à la largeur du train.

9. Système selon l'une ou plusieurs des revendications 1 à 8, **caractérisé en ce que** des tuyaux flexibles sont utilisés pour relier les modules (1-3.4) entre eux.

10. Système selon l'une ou plusieurs des revendications 1 à 9,
**caractérisé en ce que** pour alimenter des substances de service vers le réseau distributeur de la cage, il est prévu, à côté de celui-ci, une colonne (8) menant des substances et comportant des raccords (9).
